(19) **Europäisches Patentamt**
**European Patent Office**
**Office européen des brevets**

(11) **EP 2 634 840 B1**

(12) **EUROPEAN PATENT SPECIFICATION**

(45) Date of publication and mention
of the grant of the patent:
**26.10.2016 Bulletin 2016/43**

(51) Int Cl.:
**H01M 2/16** *(2006.01)*     *H01M 10/052* *(2010.01)*

(21) Application number: **13156811.5**

(22) Date of filing: **26.02.2013**

(54) **Separator including density-controlled coating layer and battery including the same**

Separator mit dichtegesteuerter Beschichtungsschicht und Batterie damit

Séparateur comprenant une couche de revêtement à densité contrôlée et batterie comprenant celui-ci

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.02.2012 KR 20120021141**

(43) Date of publication of application:
**04.09.2013 Bulletin 2013/36**

(73) Proprietor: **Cheil Industries Inc.
Gumi-si
Gyeongsangbuk-do 730-030 (KR)**

(72) Inventors:
• **HONG, Ki Chul
Gyeonggi-do, 437-711 (KR)**

• **DOH, Jae Goo
437-711 Uiwang-si, Gyeonggi-do (KR)**
• **LIM, Geon Ja
437-711 Uiwang-si, Gyeonggi-do (KR)**
• **CHUNG, Jun Ho
437-711 Uiwang-si, Gyeonggi-do (KR)**

(74) Representative: **Michalski, Stefan
Michalski Hüttermann & Partner
Patentanwälte
Speditionstraße 21
40221 Düsseldorf (DE)**

(56) References cited:
**EP-A2- 1 011 157**     **US-A1- 2002 192 561**
**US-A1- 2010 209 757**     **US-A1- 2011 052 987**
**US-A1- 2011 293 976**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Field of the Invention

The present invention relates to a separator including a coating layer, and a battery including the same.

### Description of the Related Art

A separator for an electrochemical battery refers to a middle layer disposed inside a battery to isolate a positive electrode and a negative electrode from each other while maintaining ionic conductivity to permit charge and discharge of the battery.

Recently, electrochemical batteries have been developed to have a lighter and thinner structure to improve portability of electronic devices such as mobile devices and notebook computers while ensuring high output and high capacity for use in electric cars and the like. Consequently, it is necessary for a separator of a battery to have a slim thickness and a light weight while ensuring high adhesion and shape stability based on high heat resistance in order to produce high capacity batteries.

US 2011/293976 A1 refers to a separator including a first layer that has a first principal face and a second principal face, and a second layer that is formed on at least one of the first principal face and the second principal face. The first layer is a microporous membrane including a first polymer resin, and the second layer is a microporous membrane including inorganic particles having an electrically insulating property and a second polymer resin.

US2002/192561 A1 refers to a porous separator for a winding-type lithium secondary battery having a gel-type polymer electrolyte includes a matrix made of polyvinyl chloride, or a matrix made of mixtures of polyvinylchloride and at least one polymer selected from the group consisting of polyvinylidenefluoride, a vinylidenefluoride/hexafluoropropylene copolymer, polymethacrylate, polyacrylonitrileand polyethyleneoxide.

EP 1 011 157 A2 refers to separator materials for secondary lithium batteries comprising as the base material a vinylidene fluoride-hexafluoropropylene (VdF-HFP) copolymer resin, wherein polymer particles having a higher softening point than the copolymer are blended and dispersed in the separator. As the polymer particles, fluorinated polymer particles are preferable. The separator materials for secondary lithium batteries are free from short-circuiting during the step of the heat lamination of the separator on electrode membranes.

US 2011/052987 A1 refers to a nonaqueous electrolyte battery of the present invention includes a positive electrode having a positive active material capable of intercalating and deintercalating a lithium ion, a negative electrode having a negative active material capable of intercalating and deintercalating a lithium ion, a separator interposed between the positive electrode and the negative electrode, and a nonaqueous electrolyte. The heat generation starting temperature of the positive electrode is 180° C or higher. The separator includes heat-resistant fine particles and a thermoplastic resin. The proportion of particles with a particle size of 0.2 $\mu$m or less in the heat-resistant fine particles is 10 vol.-%t or less and the proportion of particles with a particle size of 2 $\mu$m or more in the heat-resistant fine particles is 10 vol.-% or less. The separator effects a shutdown in the range of 100° C to 150° C.

US 2010/209757 A1 refers to a non aqueous electrolyte secondary battery includes a positive electrode, a negative electrode, a nonaqueous electrolyte, and a separator. The positive electrode includes a lithium composite oxide having an average composition represented by the following formula $Li_xCo_yNi_zM_{1-y-z}O_{b-a}X_a$ (1). The separator includes a base layer and a polymer resin layer provided on at least one primary surface of the base layer, and the polymer resin layer includes at least one of poly(vinylidene fluoride), poly(vinyl formal), poly(acrylic ester), and poly(methyl methacrylate).

For example, Korean Patent No. 0775310 discloses a separator which includes a coating layer of an organic/inorganic mixture formed on one or both sides of a base film by coating inorganic particles and an organic binder polymer thereon.

Although this separator can exhibit improved heat resistance and adhesion according to components of the coating layer, the thickness of the separator increases due to the coating layer. Thus, when such a separator is applied to a battery, ionic conductivity of an electrolyte in the battery can decrease, thereby causing increase in resistance of the battery (see Japanese Patent Publication No. 2004-111160A). In particular, when the coating layer is thickly formed to ensure effects of the coating layer, such a problem becomes severe.

Therefore, there is a need for a separator, which has a desirable thickness to prevent excessive increase in resistance while sufficiently exhibiting thermal stability and strong adhesion through the coating layer formed thereon.

Meanwhile, when the coating layer of the separator is formed by depositing inorganic particles on a base film vulnerable to heat, the coating layer can exhibit improved heat dissipation. However, when the amount of the inorganic particles is increased in order to obtain sufficient heat dissipation, the amount of an organic binder is relatively lowered in the coating layer, thereby deteriorating adhesion of the separator.

In this case, adhesion between the coating layer and electrodes is weakened so that force of the coating layer suppressing thermal shrinkage of the base film decreases, thereby making it difficult to prevent short circuit between a positive electrode and a negative electrode upon overheating of the battery.

Therefore, there is also an urgent need for a separator, which includes a coating layer containing a sufficient amount of inorganic particles while ensuring strong adhesion.

## Summary of the Invention

In order to solve such problems of the related art, the present inventor developed a separator which includes a coating layer formed on a base film to have a density of 1.2 g/m$^3$ to 2 g/m$^3$ using a coating agent containing a polyvinylidene fluoride homopolymer and inorganic particles having an average particle size of 1 nm to 700 nm, thereby providing a slim structure while ensuring high peel strength and high adhesion to electrodes.

It is an aspect of the present invention to provide a separator which employs a polyvinylidene fluoride homopolymer as an organic binder component of a coating agent to improve adhesion of a coating layer.

It is another aspect of the present invention to provide a separator which employs inorganic particles having an average particle size of 1 nm to 700 nm to form a coating layer having a density of 1.2 g/m$^3$ to 2 g/m$^3$, whereby the coating layer can have a relatively slim thickness while exhibiting strong adhesion.

In accordance with one aspect, the present invention provides a separator, which includes a polyolefin base film, and a coating layer of an organic and inorganic mixture formed on one or both sides of the base film, wherein the coating layer contains an organic binder of a polyvinylidene fluoride homopolymer and inorganic particles having an average particle size of 1 nm to 700 nm, and has a density of 1.2 g/m$^3$ to 2 g/m$^3$.

In accordance with another aspect, the present invention provides an electrochemical battery which includes one of the aforementioned separators, a positive electrode, a negative electrode, and an electrolyte.

The electrochemical battery may be a lithium rechargeable battery.

According to the present invention, the separator includes a coating layer which exhibits strong adhesion and has high density, thereby providing a slim structure and excellent capability in prevention of short circuit between electrodes of a battery.

Specifically, in formation of the coating layer on the separator according to the present invention, a polyvinylidene fluoride homopolymer is used as an organic binder component of a coating agent, thereby improving adhesion of the coating layer.

In addition, the coating layer of the separator is formed of the polyvinylidene fluoride homopolymer and inorganic particles having an average particle size ranging from 1 nm to 700 nm to have a density of 1.2 g/m$^3$ to 2 g/m$^3$, thereby providing a relatively slim thickness while exhibiting strong adhesion.

Further, according to the present invention, a battery is manufactured using the separator, thereby improving lifespan, stability and capacity while providing a slim structure.

Definition: Molecular weight is a measure of the sum of the atomic weights of the atoms in a molecule.

Definition: Particle size is measured according to method of a laser scattering.

Definition: Density is calculated by Expression 1.

[Expression 1]

$$\text{Density} = (\text{total weight of a separator per unit area} - \text{weight of a base film per unit area})/ \text{unit area}.$$

In Expression 1, the total weight of a separator is a weight of a separator including coating layer, and the total weight of a separator and the weight of a base film are measured by using a Precision Balance.

Further, in all physical data within the specification, the temperature if not otherwise stated is room temperature.

## Detailed description of the Invention

Hereinafter, embodiments of the present invention will be described in more detail. Descriptions of details apparent to those skilled in the art will be omitted herein.

One aspect of the present invention provides a separator, which includes a polyolefin base film, and a coating layer of an organic and inorganic mixture formed on one or both sides of the base film, wherein the coating layer contains an organic binder of a polyvinylidene fluoride homopolymer and inorganic particles having an average particle size of 1 nm to 700 nm, and has a density of 1.2 g/m$^3$ to 2 g/m$^3$.

According to the present invention, the polyvinylidene fluoride (PVdF) homopolymer preferably has a weight average molecular weight of 1,000,000 g/mol or more, more preferably 1,000,000 g/mol to 1,200,000 g/mol.

Within this molecular weight range, the polyvinylidene fluoride homopolymer can improve adhesion between the coating layer and the base film to achieve efficient suppression of thermal shrinkage of the polyolefin base film vulnerable to heat, and can provide good adhesion between the coating layer and electrodes to achieve efficient suppression of short circuit between the electrodes.

Also, within this molecular weight range, the polyvinylidene fluoride homopolymer can be smoothly dissolved in DMF, and thus can prevent excessive use of DMF and possible defects during a dry process.

According to the present invention, the inorganic particles may be selected from the group consisting of $Al_2O_3$, $SiO_2$, $B_2O_3$, $Ga_2O_3$, $TiO_2$ and $SnO_2$, without being limited thereto. These may be used alone or in combination of two or more thereof.

Preferably, the inorganic particles are $Al_2O_3$ particles.

Although not particularly limited to a certain average particle size, the inorganic particles preferably have an average particle size from 1 nm to 700 nm, more preferably from 100 nm to 500 nm.

Within this size range, the inorganic particles can prevent deterioration in coating processibility and dispersion within a coating agent, deterioration in mechanical properties, and increase in electric resistance by allowing suitable thickness adjustment of the coating layer through increase in density of the coating layer. Further, pores of a suitable size can be created in the coating layer, thereby lowering the likelihood of internal short circuit upon charge and discharge of the battery.

According to the present invention, the inorganic particles may be prepared in the form of an inorganic dispersant, which is obtained by dissolving the inorganic particles in a suitable solvent, for example, acetone.

In use, the inorganic particles are preferably dispersed in a suitable size using a ball mill or a bead mill. More preferably, the inorganic particles are used after being dispersed using the bead mill.

When using the ball mill instead of the bead mill, an inorganic material cannot be pulverized to a desired particle size within a certain period of time and there can be difficulty adjusting the density of the coating layer.

In the present invention, dispersion of $Al_2O_3$ particles may be carried out by an in-line system of a pre-mixer tank filled with acetone and bead mills arranged to allow the acetone to circulate between the pre-mixer tank and the bead mills. Here, the $Al_2O_3$ particles are added in an amount of 25 wt% with respect to acetone at a loading speed of 2 kg/hr into the pre-mixer tank, followed by milling for a predetermined period of time.

According to the present invention, the inorganic particles are preferably stirred using the ball mill or bead mill for 0.5 to 4.5 hours, more preferably 1 to 3.5 hours, for dispersion of the inorganic particles.

Within this range, the inorganic particles can be sufficiently dispersed and can have a suitable average particle size in the coating agent, thereby enabling formation of a coating layer having a high density.

According to the present invention, the coating layer may further contain a polyvinylidene fluoride-hexafluoropropylene copolymer as an organic binder component.

According to the present invention, the polyvinylidene fluoride-hexafluoropropylene copolymer preferably has a weight average molecular weight of 800,000 g/mol or less, more preferably 600,000 g/mol to 800,000 g/mol.

Within this molecular weight range of the polyvinylidene fluoride-hexafluoropropylene copolymer, the separator exhibits excellent electrolyte impregnation, so that a battery including the separator can achieve efficient output of electricity.

In the polyvinylidene fluoride-hexafluoropropylene copolymer used in the present invention, although the content of each of polyvinylidene fluoride and hexafluoropropylene is not particularly limited, hexafluoropropylene may be present in an amount of 0.1 to 40 % by weight based on the total weight of the copolymer.

In preparation of the coating agent used in the present invention, the polyvinylidene fluoride homopolymer, the polyvinylidene fluoride-hexafluoropropylene copolymer, and the inorganic particles may be dissolved in suitable solvents, respectively, and mixed with each other.

For example, the polyvinylidene fluoride homopolymer may be prepared as a polymer solution, which is obtained by dissolving the polyvinylidene fluoride homopolymer in dimethylformamide (DMF). The polyvinylidene fluoride-hexafluoropropylene copolymer may be prepared as a polymer solution, which is obtained by dissolving the polyvinylidene fluoride-hexafluoropropylene copolymer in acetone, and the inorganic particles may be prepared as an inorganic dispersant, which is obtained by dissolving the inorganic particles in acetone.

The polymer solutions and the inorganic dispersant may be mixed in a suitable solvent to prepare a coating agent.

Examples of solvents used in the present invention may include ketones such as acetone, or alcohols such as methanol, ethanol, isopropyl alcohol, and the like, without being limited thereto. These solvents provide an advantage of allowing easy removal upon drying after coating.

According to the present invention, the coating agent may be prepared in the form of a mixture obtained by sufficiently stirring the polymer solutions, the inorganic dispersant and the solvent using a ball mill, a bead mill or a screw mixer.

The separator of the present invention may be prepared by coating the coating agent on one or both sides of the base film, followed by drying the coating agent.

Any typical coating method known in the art may be used without limitation in order to coat the base film with the coating agent. For example, dip coating, die coating, roll coating, or comma coating may be used. These coating processes may be used alone or in combination thereof.

Although not particularly limited to a certain ratio in the coating layer of the organic and inorganic mixture, the coating layer may contain: 5 to 10 parts by weight of the polyvinylidene fluoride homopolymer; 5 to 20 parts by weight of the polyvinylidene fluoride-hexafluoropropylene copolymer; and 70 to 90 parts by weight of the inorganic particles, based on 100 parts by weight of the coating layer in terms of solid content.

Within this range, the inorganic particles can provide thermal stability, that is, heat resistance and heat dissipation, the organic binder can provide sufficient improvement of adhesion, and the coating layer can be formed in a relatively flat shape by preventing deterioration in coating processibility and dispersion of the coating agent.

Specifically, within this content range, the organic binder can prevent excessive reduction in amount of the inorganic particles while sufficiently improving adhesion of the coating layer, thereby providing suitable heat dissipation and heat resistance.

Further, within this content range, the inorganic particles can achieve effective suppression of thermal shrinkage of the separator through sufficient heat dissipation while allowing the organic binder to be added in a desired amount or more so as to provide strong adhesion.

According to the present invention, the coating layer of the separator preferably has a density of 1.2 g/m$^3$ to 2 g/m$^3$, more preferably 1.8 g/m$^3$ to 2 g/m$^3$.

Within this density range, the coating layer can be formed to a slim thickness while ensuring sufficient adhesion, excellent heat resistance and heat dissipation.

The density of the coating layer can be calculated using the thickness of the coating layer and the loading amount.

In the coating layer, the loading amount of the coating agent means a weight per unit area of the coating layer (g/m$^2$).

Since the thickness of the separator for batteries is limited within a predetermined range, it is desirable that the loading amount increase to form a coating layer of a higher density in order to allow the coating layer to exhibit sufficient effects for the same area and the same thickness of the coating layer.

According to the present invention, the coating layer preferably has a thickness of 0.01 $\mu$m to 10 $\mu$m, more preferably 1 $\mu$m to 7 $\mu$m. Within this thickness range, the coating layer can be formed to a suitable thickness to have excellent thermal stability and adhesion, and can prevent the separator from being excessively thickened, thereby preventing increase in internal resistance of the battery.

According to the present invention, the coating layer preferably has a loading amount of 1 g/m$^2$ or more, more preferably 5 g/m$^2$ to 9 g/m$^2$.

Any typical method known in the art may be used to measure the loading amount in the coating layer without limitation.

For example, a prepared coating layer is cut into a size of 10 cm (MD) $\times$ 20 cm (TD) to prepare specimens, each weight of which is measured using an electronic scale, followed by calculating the loading amount. Calculation results of the loading amount are given in g/m$^2$.

According to the present invention, the polyolefin base film may be selected from the group consisting of may be selected from the group consisting of a polyethylene monolayer film, a polypropylene monolayer film, a polyethylene/polypropylene bilayer film, a polypropylene/polyethylene/polypropylene triple-layer film, and a polyethylene/polypropylene/polyethylene triple-layer film.

The polyolefin base film preferably has a thickness of 1 $\mu$m to 40 $\mu$m, more preferably 1 $\mu$m to 25 $\mu$m. Within this thickness range of the base film, the separator can be formed to a suitable thickness, thereby preventing short circuit of the positive electrode and the negative electrode while improving stability of the battery. If the thickness of the separator exceeds this range, there is a problem of increase in internal resistance of the battery.

In the separator including the coating layer of the organic and inorganic mixture, peel strength between the coating layer and the polyolefin base film may be 0.490333 N/cm2 (50 gf/cm$^2$) or more. Within this range, the coating layer has good peeling resistance, and it is possible to prevent separation of the inorganic particles from the coating layer in a process of assembling the battery using the separator. Further, within this range, the separator exhibits sufficiently strong adhesion between the coating layer and the base film to prevent shrinkage of the base film due to heat and separation between the coating layer and the base film due to overheating of the battery, thereby preventing short circuit of the electrodes while improving thermal stability.

Here, any typical method known in the art may be used without limitation to measure the peel strength of the coating layer.

For example, the peel strength of the coating layer can be measured as follows: a prepared coating layer is cut into a 1.5 cm $\times$ 7 cm specimen, which in turns is strongly attached to a glass plate using a transparent double-sided tape (3M), followed by measuring force required to separate the coating layer using a tensile strength tester (UTM; Universal Test Machine).

When the separator including the coating layer of the organic and inorganic mixture according to the present invention is applied to an electrochemical battery, the coating layer may exhibit an adhesive strength of $0.196133$ N/cm$^2$ ($20$ gf/cm$^2$) or more to electrodes of the battery. Within this range, the coating layer and the electrodes can be sufficiently strongly attached together, thereby preventing short circuit of the positive and negative electrodes. In addition, in production of high output large capacity batteries, the separator improves stability and lifespan of the batteries.

Here, any typical method known in the art may be used without limitation to measure the adhesive strength between the coating layer and the electrodes of a battery.

For example, the adhesive strength between the coating layer and the electrodes can be measured as follows: a prepared separator of the present invention is placed between both electrodes to prepare a battery stack of positive electrode/separator/negative electrode, which in turn is inserted into an aluminum pouch. Then, with an electrolyte injected into the aluminum pouch, the aluminum pouch is sealed and formed into a single-plate cell, which in turn is subjected to a force of $980$ N/cm$^2$ ($100$ kgf/cm$^2$) for 20 seconds at 50°C and left for 12 hours. Next, after disassembling each of the single-plate cells, the battery stack of the positive electrode, the separator and the negative electrode bonded to each other is cut into a size of 1.5 cm (MD) $\times$ 7 cm (TD) and attached to a glass plate using a transparent double-sided tape (3M), followed by measuring adhesive strength between the electrodes and the separator using a tensile strength tester (UTM; Universal Test Machine).

The separator comprising the coating layer of the organic and inorganic mixture may have a thermal shrinkage of 30% or less in a machine direction (MD) or in a transverse direction (TD), as measured after leaving the separator at 150°C for 1 hour. Within this range, the separator can effectively prevent short circuit of the electrodes, thereby improving stability of the battery.

Here, any typical method known in the art may be used without limitation to measure the thermal shrinkage of the separator.

For example, the thermal shrinkage of the separator can be measured as follows: a prepared separator is cut into a size of about 5 cm (width) $\times$ about 5 cm (length) and left in a chamber at 150°C for 1 hour, followed by measuring degrees of shrinkage in MD and TD directions to calculate thermal shrinkage.

In accordance with another aspect, the present invention provides an electrochemical battery, which includes the polyolefin porous separator including the coating layer of the organic and inorganic mixture, a positive electrode, and a negative electrode, and which is filled with an electrolyte.

Any type of battery known in the art may be used without limitation.

Examples of the electrochemical battery of the present invention may include lithium rechargeable batteries, such as lithium metal rechargeable batteries, lithium ion rechargeable batteries, lithium polymer rechargeable batteries, lithium ion polymer rechargeable batteries, and the like.

Any typical method known in the art can be used without limitation in manufacture of the electrochemical battery according to the present invention.

For example, the electrochemical battery according to the present invention may be manufactured by placing the polyolefin separator including the coating layer of the organic and inorganic mixture according to the present invention between the positive electrode and the negative electrode, and filling a space therebetween with the electrolyte.

The electrodes (positive electrode and negative electrode) of the electrochemical battery according to the present invention may be prepared in the form of assemblies of electrode active materials and current collectors, which are combined by a typical method used in the art.

The positive electrode includes a positive electrode active material, which allows reversible intercalation and deintercalation of lithium ions. Examples of such positive electrode active materials may include composite metal oxides of lithium and at least one metal selected from cobalt, manganese and nickel, without being limited thereto. The amount of lithium dissolved between metal elements may be determined in various ways. In addition to these metals, the positive electrode active material may further include an element selected from the group consisting of Mg, Al, Co, Ni, K, Na, Ca, Si, Ti, Sn, V, Ge, Ga, B, As, Zr, Mn, Cr, Fe, Sr, V, and rare earth metal elements. Preferably, the positive electrode is a composite metal oxide of lithium and a metal selected from the group consisting of Co, Ni, Mn, Al, Si, Ti and Fe, more preferably lithium cobalt oxide (LCO, for example, LiCoO$_2$), lithium nickel cobalt manganese oxide (NCM, for example, Li[Ni(x)Co(y)Mn(z)]O$_2$), lithium manganese oxide (LMO, for example, LiMn$_2$O$_4$, LiMnO$_2$), lithium iron phosphate (LFP, for example, LiFePO$_4$), lithium nickel oxide (LNO, for example, LiNiO$_2$), and the like.

The negative electrode includes a negative electrode active material, which allows reversible intercalation and deintercalation of lithium ions. Examples of such negative electrode active materials include crystalline or amorphous carbon, or carbonous negative electrode active materials of carbon composites (thermally decomposed carbon, coke, graphite), combusted organic polymer compounds, carbon fibers, tin oxide compounds, lithium metals, or alloys of lithium and other elements. Examples of amorphous carbon may include hard carbon, coke, mesocarbon microbead (MCMB) baked at 1500°C, mesophase pitch-based carbon fiber (MPCF) baked at 1500°C, and the like. Examples of crystalline carbon may include graphite materials, specifically natural graphite, graphitized coke, graphitized MCMB, graphitized MPCF, and the like. The negative electrode is preferably a crystalline or amorphous carbon electrode.

The positive electrode or negative electrode may be produced by dispersing an electrode active material, a binder, a conductive material, and, if needed, a thickener in a solvent to produce an electrode slurry composition, followed by depositing the slurry composition on an electrode current collector. The positive electrode current collector may be made of aluminum, aluminum alloys, and the like. The negative electrode current collector may be made of copper, copper alloys, and the like. The positive electrode current collector and negative electrode current collector may be prepared in the form of a foil or mesh.

As the current collector of the battery according to the present invention, any typical current collector known in the art may be used without limitation.

Examples of the positive electrode current collector may include aluminum foils, nickel foils, and combinations thereof, without being limited thereto.

Examples of the negative electrode current collector may include copper foils, gold foils, nickel foils, copper alloy foils, and combinations thereof, without being limited thereto.

As the electrolyte of the battery according to the present invention, any typical electrolyte for electrochemical batteries known in the art may be used without limitation.

The electrolyte may be obtained through dissolution or dissociation of a salt having, for example, a structure of $A^+ B^-$ in an organic solvent.

Examples of the $A^+$ component, that is, cation, may include alkali metal cations such as $Li^+$, $Na^+$ or $K^+$, and combinations thereof, without being limited thereto.

Examples of the $B^-$ component, that is, anion, may include $PF_6^-$, $BF_4^-$, $Cl^-$, $Br^-$, $I^-$, $ClO_4^-$, $AsF_6^-$, $CH_3CO_2^-$, $CF_3SO_3^-$, $N(CF_3SO_2)_2^-$, $C(CF_2SO_2)_3^-$, and combinations thereof, without being limited thereto.

Examples of the organic solvent may include propylene carbonate (PC), ethylene carbonate (EC), diethylcarbonate (DEC), dimethylcarbonate (DMC), dipropylcarbonate (DPC), dimethylsulfoxide, acetonitrile, dimethoxyethane, diethoxyethane, tetrahydrofuran, N-methyl-2-pyrrolidone (NMP), ethylmethylcarbonate (EMC), and $\gamma$-butyrolactone, and the like. These may be used alone or in combination thereof.

Next, the present invention will be described in more detail with reference to some examples. However, it should be understood that the following examples are provided for illustration only and are not to be construed in any way as limiting the present invention.

### Examples 1 to 4

Preparation of a separator including a coating layer containing a polyvinylidene fluoride homopolymer having a weight average molecular weight of 1,000,000 g/mol or more and inorganic particles having an average particle size of 700 nm or less, and having a density of 1.2 g/m$^3$ or more.

### Example 1

(1) Preparation of coating agent

1) A polyvinylidene fluoride-hexafluoropropylene ('PVdF-HFP') copolymer (21216, Solvay) having a weight average molecular weight of 700,000 g/mol was added in an amount of 10 wt% to acetone (Daejung Chemicals & Metals), followed by stirring at 25°C for 4 hours using a stirrer to prepare a first polymer solution

2) A polyvinylidene fluoride ('PVdF') homopolymer (5130, Solvay) having a weight average molecular weight of 1,100,000 g/mol was added in an amount of 10 wt% to DMF (Daejung Chemicals & Metals), followed by stirring at 25°C for 4 hours using a stirrer to prepare a second polymer solution.

3) $Al_2O_3$ particles (LS235, Nippon Light Metal Company, Ltd.) were added in an amount of 25 wt% to acetone (Daejung Chemicals & Metals), followed by milling for dispersion at 25°C for 3 hours using a bead mill to prepare an inorganic dispersant.

The prepared first polymer solution, second polymer solution and inorganic dispersant were mixed in a ratio of first polymer solution : second polymer solution : inorganic dispersant : solvent (acetone) of 1:1:3:6, and stirred at 25°C for 2 hours using a power mixer to prepare a coating agent.

(2) Preparation of separator

The prepared coating agent was deposited on both sides of a 9 $\mu$m thick polyethylene monolayer base film by dip coating and dried to prepare a separator.

### Example 2

A separator was prepared in the same manner as in Example 1 except that dispersion of the inorganic particles was carried out for 2 hours to prepare an inorganic dispersant in (1) of Example 1.

### Example 3

A separator was prepared in the same manner as in Example 1 except that dispersion of the inorganic particles was carried out for 1 hour to prepare an inorganic dispersant in (1) of Example 1.

### Example 4

A separator was prepared in the same manner as in Example 1 except that dispersion of the inorganic particles was carried out for 0.5 hours to prepare an inorganic dispersant in (1) of Example 1.

### Comparative Example 1

A separator was prepared in the same manner as in Example 1 except that dispersion of the inorganic particles was carried out using a ball mill for 0.5 hours to prepare an inorganic dispersant in (1) of Example 1.

### Experimental Example 1

Measurement of density of coating layer

The density of the coating layer in each of the separators prepared in Examples 1 to 4 and Comparative Example 1 was calculated using the thickness and the loading amount of each coating layer.
First, the thickness of each coating layer was measured using an SEM image and a microcaliper.
Then, each of the coating layers was cut into 10 cm (MD) $\times$ 20 cm (TD) pieces to prepare specimens, each weight of which was measured using an electronic scale, followed by calculating the loading amount of the coating agent.
Then, the density of each of the coating layers was calculated using the thickness and the loading amount of the coating layer. Calculation results of the coating density are given in $g/m^3$.
The calculation results of the coating density are shown in Table 1.

### Experimental Example 2

Measurement of peel strength between coating layer and base film

Each of the coating layers prepared in Examples 1 to 4 and Comparative Example 1 was cut into 1.5 cm $\times$ 7 cm pieces to prepare a total of ten specimens. Each of the specimens were strongly attached to a glass plate using a transparent double-sided tape (3M), followed by measuring force for separating the coating layer using a tensile strength tester (UTM; Universal Test Machine).
Measurement results of the peel strength are shown in Table 1.

### Experimental Example 3

Measurement of adhesive strength between coating layer and electrode

Each of the separators prepared in in Examples 1 to 4 and Comparative Example 1 was placed and bonded between both electrodes of a lithium rechargeable battery to prepare a battery stack of positive electrode/separator/negative electrode, which in turn was inserted into an aluminum pouch. The positive electrode was a lithium cobalt oxide (LCO) electrode, and the negative electrode was a crystalline carbon electrode.
Then, with an electrolyte injected into the aluminum pouch, the aluminum pouch was sealed and formed into three single-plate cells, which in turn were subjected to a force of 980 $N/cm^2$ (100 $kgf/cm^2$) for 20 seconds at 50°C and were left for 12 hours.
Next, after disassembling each of the single-plate cells, the battery stack of the positive electrode, the separator and the negative electrode bonded to each other was cut into a size of 1.5 cm (MD) $\times$ 7 cm (TD) and attached to a glass plate using a transparent double-sided tape (3M), followed by measuring adhesive strength between the coating layer and the electrodes using a tensile strength tester (UTM; Universal Test Machine).

Measurement results of the adhesive strength between the coating layer of the separator and the electrodes are shown in Table 1.

Table 1

|  | $Al_2O_3$ average particle size (nm) | Loading amount in coating layer (g/m²) | Thickness of coating layer (μm) | Density of coating layer (g/m³) | Peel strength (N/cm²) | Adhesive strength to electrodes (N/cm²) |
|---|---|---|---|---|---|---|
| Example 1 | $D_{50}$ = 350 | 8.2 | 4.2 | 1.952 | 4.4 N/cm² (450 gf/cm²) | 0.4 N/cm² (42 gf/cm²) |
| Example 2 | $D_{50}$ = 370 | 7.4 | 4.1 | 1.805 | 3.1 N/cm² (320 gf/cm²) | 0.34 N/cm² gf/cm²) |
| Example 3 | $D_{50}$ = 410 | 6.8 | 4.4 | 1.545 | 2.8 N/cm² (290 gf/cm²) | 0.39 N/cm² (40 gf/cm²) |
| Example 4 | $D_{50}$ = 470 | 6.3 | 5.0 | 1.260 | 1.7 N/cm² (180 gf/cm²) | 0.3 N/cm² gf/cm²) |
| Comparative Example 1 | $D_{50}$ = 650 | 5.2 | 5.1 | 1.020 | 0.54 N/cm² (55 gf/cm²) | 0.15 N/cm² (15 gf/cm²) |

As shown in Table 1, in Examples 1 to 4 wherein the inorganic particles were sufficiently dispersed using a bead mill for 0.5 hours or more to have an average particle size of 700 nm or less, all of the coating layers had higher densities than that of the coating layer of Comparative Example 1 having a similar thickness ranging from 4 μm to 5 μm, and also had superior adhesive strength and peel strength to the coating layer.

**Example 5**

Preparation of a separator including a coating layer containing a polyvinylidene fluoride homopolymer having a weight average molecular weight of 1,000,000 g/mol or more

(1) Preparation of coating agent

1) A polyvinylidene fluoride-hexafluoropropylene ('PVdF-HFP') copolymer (Solvay) having a weight average molecular weight of 700,000 g/mol was added in an amount of 10 wt% to acetone (Daejung Chemicals & Metals), followed by stirring at 25°C for 4 hours using a stirrer to prepare a first polymer solution

2) A polyvinylidene fluoride ('PVdF') homopolymer (Solvay) having a weight average molecular weight of 1,100,000 g/mol was added in an amount of 10 wt% to DMF (Daejung Chemicals & Metals), followed by stirring at 25°C for 4 hours using a stirrer to prepare a second polymer solution.

3) $Al_2O_3$ particles (Nippon Light Metal Company, Ltd.) were added in an amount of 25 wt% to acetone (Daejung Chemicals & Metals), followed by milling for dispersion at 25°C for 3 hours using a ball mill to prepare an inorganic dispersant.

The prepared first polymer solution, second polymer solution and inorganic dispersant were mixed in a ratio of first polymer solution : second polymer solution : inorganic dispersant : solvent (acetone) of 1:1:3:6, and stirred at 25°C for 2 hours using a power mixer to prepare a coating agent.

(2) Preparation of separator

The prepared coating agent was deposited on both sides of a 16 $\mu$m thick polyethylene monolayer base film by dip coating and dried to prepare a separator, which had a coating agent loading amount of 12 g/m$^2$ and a 8 $\mu$m thick coating layer.

## Comparative Examples 2 to 4

Preparation of a separator including a coating layer containing a polyvinylidene fluoride homopolymer having a weight average molecular weight of less than 1,000,000 g/mol

## Comparative Example 2

A separator was prepared in the same manner as in Example 1 except that a PVdF homopolymer having a weight average molecular weight of 500,000 g/mol was used in (1) of Example 5.

## Comparative Example 3

A separator was prepared in the same manner as in Example 1 except that a PVdF homopolymer having a weight average molecular weight of 700,000 g/mol was used in (1) of Example 5.

## Comparative Example 3

A separator was prepared in the same manner as in Example 1 except that a PVdF homopolymer having a weight average molecular weight of 900,000 g/mol was used in (1) of Example 5.

## Experimental Example 4

Measurement of thermal shrinkage of separator

Each of the separators prepared in Example 5 and Comparative Examples 2 to 4 was cut into 5 cm x 5 cm pieces to prepare a total of 10 specimens. Each of the specimens was left in a chamber at 150°C for 1 hour, followed by measuring degrees of shrinkage of each specimen in MD and TD directions to calculate thermal shrinkage.
Measurement results of the thermal shrinkage are shown in Table 2.

## Experimental Example 5

Measurement of peel strength between coating layer and base film

The peel strength between each of the coating layers prepared Example 5 and Comparative Examples 2 to 4 and the base film was measured in the same manner as in Experimental Example 2.
Measurement results of the peel strength are shown in Table 2.

## Experimental Example 6

Measurement of adhesive strength between coating layer and electrode

The adhesive strength between each of the coating layers prepared Example 5 and Comparative Examples 2 to 4 and the base film was measured in the same manner as in Experimental Example 3.
Measurement results of the adhesive strength are shown in Table 2.

Table 2

| | Thermal shrinkage of separator (%) | Peel strength between coating layer and base film (N/cm$^2$) | Adhesive strength between coating layer and electrode (N/cm$^2$) |
|---|---|---|---|
| Example 5 | 15 | 0.98 (100 gf/cm$^2$) | 0.41 (42 gf/cm$^2$) |

(continued)

|  | Thermal shrinkage of separator (%) | Peel strength between coating layer and base film (N/cm$^2$) | Adhesive strength between coating layer and electrode (N/cm$^2$) |
|---|---|---|---|
| Comparative Example 2 | 28 | 0.19 (20 gf/cm$^2$) | 0.078 (8 gf/cm$^2$) |
| Comparative Example 3 | 25 | 0.34 (35gf/cm$^2$) | 0.127 (13 gf/cm$^2$) |
| Comparative Example 4 | 25 | 0.44 (45gf/cm$^2$) | 0.166 (17 gf/cm$^2$) |

As shown in Table 2, it can be seen that the separator prepared in Example 5 using the PVdF-HFP copolymer having a weight average molecular weight of 300,000 g/mol and the PVdF homopolymer having a weight average molecular weight of 1,000,000 g/mol demonstrated better results in terms of all test items including thermal shrinkage, peel strength, and adhesive strength, than the separators prepared in Comparative Examples 2 to 4 wherein the PVdF-HFP copolymer, and the PVdF homopolymer having a molecular weight of less than 1,000,000 g/mol were used.

In particular, according to the fact that the peel strength between the coating layer and the base film gradually increased with increasing weight average molecular weight of the PVdF homopolymer and abruptly increased by about 2.2 times when the PVdF homopolymers having weight average molecular weights of 900,000 g/mol and 1,100,000 g/mol were used, it was considered that the use of a PVdF homopolymer having a weight average molecular weight of about 1,000,000 g/mol or more could provide sufficiently high peel strength. Further, the adhesive strength between the coating layer and electrodes of a battery also exhibited a similar tendency to the peel strength.

## Claims

1. A separator including a polyolefin base film, and a coating layer of an organic and inorganic mixture formed on one or both sides of the base film,
   wherein the coating layer has a density of 1.2 g/m$^3$ to 2 g/m$^3$ and contains a polyvinylidene fluoride homopolymer has a weight average molecular weight of 1,000,000 g/mol or more, an organic binder of a polyvinylidene fluoride-hexafluoropropylene copolymer having a weight average molecular weight of 800,000 g/mol or less, and inorganic particles having an average particle size of 1 nm to 700 nm.

2. The separator according to claim 1, wherein the polyvinylidene fluoride homopolymer has a weight average molecular weight ranging from 1,000,000 g/mol to 1,200,000 g/mol.

3. The separator according to claim 1 or 2, wherein the coating layer has a thickness of 10 $\mu$m or less.

4. The separator according to claims 1 to 3, wherein the inorganic particles comprise at least one selected from the group consisting of $Al_2O_3$, $SiO_2$, $B_2O_3$, $Ga_2O_3$, $TiO_2$ and $SnO_2$ particles.

5. The separator according to claims 1 to 4, wherein the polyolefin base film is one selected from the group consisting of a polyethylene monolayer film, a polypropylene monolayer film, a polyethylene/polypropylene bilayer film, a polypropylene/polyethylene/polypropylene triple-layer film, and a polyethylene/polypropylene/polyethylene triple-layer film.

6. The separator according to any one of claims 1 to 5, wherein the coating layer has a peel strength of 0.49 N/cm$^2$ (50 gf/cm$^2$) or more.

7. The separator according to any one of claims 1 to 6, wherein an adhesive strength between the coating layer and electrodes of a battery is 0.196 N/cm$^2$ (20 gf/cm$^2$) or more.

8. A lithium ion rechargeable battery comprising a separator according to claims 1 to 7.

9. The The lithium ion rechargeable battery according to claim 8,

wherein the electrodes comprises a positive electrode and a negative electrode, the positive electrode being selected from the group consisting of lithium cobalt oxide, lithium nickel cobalt manganese oxide, lithium manganese oxide, lithium iron phosphate and lithium nickel oxide electrodes; and the negative electrode being a crystalline or amorphous carbon electrode.

10. An electrochemical battery comprising a positive electrode, a negative electrode, the separator according to any one of claims 1 to 7 and an electrolyte.

11. The electrochemical battery according to claim 10, wherein the electrochemical battery is a lithium rechargeable battery.

**Patentansprüche**

1. Separator enthaltend eine Polyolefingrundfolie und eine Beschichtungsschicht aus einer organischen und anorganischen Mischung, die auf einer oder beiden Seiten der Grundfolie gebildet wird,
wobei die Beschichtungsschicht eine Dichte von 1,2 $g/m^3$ bis 2 $g/m^3$ aufweist und ein Polyvinylidenfluoridhomopolymer, das ein gewichtsdurchschnittliches Molekulargewicht von 1.000.000 g/Mol oder mehr aufweist, ein organisches Bindemittel eines Polyvinylidenfluorid-Hexafluorpropylen-Copolymers, das ein gewichtsdurchschnittliches Molekulargewicht von 800.000 g/Mol oder weniger aufweist und anorganische Teilchen, die eine durchschnittliche Teilchengröße von 1 nm bis 700 nm aufweisen, enthält.

2. Separator nach Anspruch 1, wobei das Polyvinylidenfluoridhomopolymer ein gewichtsdurchschnittliches Molekulargewicht im Bereich von 1.000.000 g/Mol bis 1.200.000 g/Mol aufweist.

3. Separator nach Anspruch 1 oder 2, wobei die Beschichtungsschicht eine Dicke von 10 $\mu$m oder weniger aufweist.

4. Separator nach den Ansprüchen 1 bis 3, wobei die anorganischen Teilchen mindestens eines umfassen ausgewählt aus der Gruppe bestehend aus $Al_2O_3$-, $SiO_2$-, $B_2O_3$-, $Ga_2O_3$-, $TiO_2$- und $SnO_2$-Teilchen.

5. Separator nach den Ansprüchen 1 bis 4, wobei die Polyolefingrundfolie eine ist ausgewählt aus der Gruppe bestehend aus einem Polyethylen-Einschichtfilm, einem Polypropylen-Einschichtfilm, einem Polyethylen-Polypropylen-Zweischichtfilm, einem Polypropylen-Polyethylen-Polypropylen-Dreischichtfilm und einem Polyethylen-Polypropylen-Polyethylen-Dreischichtfilm.

6. Separator nach einem der Ansprüche 1 bis 5, wobei die Beschichtungsschicht eine Schälfestigkeit von 0,49 $N/cm^2$ (50 Kilopond/$cm^2$) oder mehr aufweist.

7. Separator nach einem der Ansprüche 1 bis 6, wobei die Haftfestigkeit zwischen der Beschichtungsschicht und Elektroden einer Batterie 0,196 $N/cm^2$ (20 Kilopond/$cm^2$) oder mehr beträgt.

8. Wiederaufladbare Lithiumionenbatterie umfassend einen Separator nach den Ansprüchen 1 bis 7.

9. Wiederaufladbare Lithiumionenbatterie nach Anspruch 8, wobei die Elektroden eine positive Elektrode und eine negative Elektrode umfassen, wobei die positive Elektrode aus der Gruppe ausgewählt ist bestehend aus Lithium-Kobaltoxid-, Lithium-Nickel-Kobalt-Manganoxid-, Lithium-Manganoxid-, Lithium-Eisenphosphat- und Lithium-Nickeloxidelektroden; und die negative Elektrode eine kristalline oder amorphe Kohlenstoffelektrode ist.

10. Elektrochemische Batterie umfassend eine positive Elektrode, eine negative Elektrode, den Separator nach einem der Ansprüche 1 bis 7 und einen Elektrolyt.

11. Elektrochemische Batterie nach Anspruch 10, wobei die elektrochemische Batterie eine wiederaufladbare Lithiumbatterie ist.

**Revendications**

1. Séparateur comprenant un film de base constitué d'une polyoléfine, et une couche de revêtement constituée d'un mélange organique et inorganique formée sur un côté ou sur les deux côtés du film de base,
dans lequel la couche de revêtement a une densité de 1,2 g/m$^3$ à 2 g/m$^3$ et contient un homopolymère de fluorure de polyvinylidène ayant une masse moléculaire moyenne en poids de 1 000 000 g/mol ou plus, un liant organique constitué d'un copolymère de fluorure de polyvinylidène-hexafluoropropylène ayant une masse moléculaire moyenne en poids de 800 000 g/mol ou moins, et des particules inorganiques ayant une taille moyenne de particule de 1 nm à 700 nm.

2. Séparateur selon la revendication 1, dans lequel l'homopolymère de fluorure de polyvinylidène a une masse moléculaire moyenne en poids de 1 000 000 g/mol à 1 200 000 g/mol.

3. Séparateur selon la revendication 1 ou 2, dans lequel la couche de revêtement a une épaisseur de 10 μm ou moins.

4. Séparateur selon les revendications 1 à 3, dans lequel les particules inorganiques comprennent au moins une particule sélectionnée dans le groupe constitué des particules $Al_2O_3$, $SiO_2$, $B_2O_3$, $Ga_2O_3$, $TiO_2$ and $SnO_2$.

5. Séparateur selon les revendications 1 à 4, dans lequel le film de base constitué d'une polyoléfine est un film sélectionné dans le groupe constitué d'un film monocouche de polyéthylène, d'un film monocouche de polypropylène, d'un film à deux couches de polyéthylène/polypropylène, d'un film à trois couches de polypropylène/polyéthylène/polypropylène, et d'un film à trois couches de polyéthylène/polypropylène/polyéthylène.

6. Séparateur selon l'une quelconque des revendications 1 à 5, dans lequel la couche de revêtement a une résistance au décollement de 0,49 N/cm$^2$ (50 gf/cm$^2$) ou plus.

7. Séparateur selon l'une quelconque des revendications 1 à 6, dans lequel une force d'adhérence entre la couche de revêtement et les électrodes d'une batterie est de 0,196 N/cm$^2$ (20 gf/cm$^2$) ou plus.

8. Batterie rechargeable au lithium-ion comprenant un séparateur selon les revendications 1 à 7.

9. Batterie rechargeable au lithium-ion selon la revendication 8, dans laquelle les électrodes comprennent une électrode positive et une électrode négative, l'électrode positive étant sélectionnée dans le groupe constitué d'électrodes au lithium-oxyde de cobalt, au lithium-oxyde de nickel, de cobalt et de manganèse, au lithium-oxyde de manganèse, au lithium-phosphate de fer, et au lithium-oxyde de nickel ; et l'électrode négative étant une électrode en carbone cristallin ou amorphe.

10. Batterie électrochimique comprenant une électrode positive, une électrode négative, le séparateur selon l'une quelconque des revendications 1 à 7, et un électrolyte.

11. Batterie électrochimique selon la revendication 10, la batterie électrochimique étant une batterie rechargeable au lithium.

**EP 2 634 840 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011293976 A1
- US 2002192561 A1
- EP 1011157 A2
- US 2011052987 A1
- US 2010209757 A1
- KR 0775310
- JP 2004111160 A